(19) Europäisches Patentamt
European Patent Office
Office européen des brevets

(11) **EP 4 676 030 A1**

(12) **EUROPEAN PATENT APPLICATION**

(43) Date of publication:
**07.01.2026 Bulletin 2026/02**

(21) Application number: **24306071.2**

(22) Date of filing: **02.07.2024**

(51) International Patent Classification (IPC):
**H04N 19/105** (2014.01)  **H04N 19/11** (2014.01)
**H04N 19/117** (2014.01)  **H04N 19/176** (2014.01)
**H04N 19/593** (2014.01)

(52) Cooperative Patent Classification (CPC):
**H04N 19/593; H04N 19/105; H04N 19/11;
H04N 19/117; H04N 19/176**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **InterDigital CE Patent Holdings, SAS
75017 Paris (FR)**

(72) Inventors:
• **RATH, Gagan Bihari
35000 RENNES (FR)**
• **DUMAS, Thierry
35700 RENNES (FR)**
• **REUZE, Kevin
35700 RENNES (FR)**

(74) Representative: **Vossius & Partner
Patentanwälte Rechtsanwälte mbB
Siebertstraße 3
81675 München (DE)**

(54) **INTRA PREDICTION WITH LINE UPDATE**

(57)  The present systems and methods are an intra prediction method for directional modes, where the initial predictions of pixels are made using the predicted values in the previous adjacent line. The position dependent pixel compensation (PDPC) process is applied to the initial prediction if applicable. In the systems and methods, the predicted value at a pixel depends not only on the reference sample(s) but on the PDPC update in the previous line. This prediction method may be applied to purely vertical and purely horizontal prediction modes and to the directional modes having integer slopes. That is, the prediction modes when the predictor values for the target pixels match directly with reference samples. The PDPC process may be modified to account for this line by line prediction process. The systems and methods have the potential to improve the compression efficiency.

FIG. 8

EP 4 676 030 A1

**Description**

**TECHNICAL FIELD**

The present embodiments generally relate to systems and methods for intra prediction with line update.

**BACKGROUND**

Video coding standards such as H.266/ Versatile Video Coding (VVC) and the current exploratory compression model (ECM) include many directional modes for intra prediction of a block. With these directional modes, a target block is predicted line by line where a line can refer to a row or a column depending on the directionality of the mode. The prediction is made based on already decoded samples on the left of the block and the top of the block. Each line, after prediction, undergoes position dependent pixel compensation (PDPC) processing if applicable. Since the initial prediction is made using the reference lines, the local correlation between neighbor pixels may not be efficiently utilized.

**SUMMARY**

In some aspects, the present systems and methods are an intra prediction method for directional modes, where the initial predictions of pixels are made using the predicted values in the previous adjacent line. The position dependent pixel compensation (PDPC) process is applied to the initial prediction if applicable. In the systems and methods, the predicted value at a pixel depends not only on the reference sample(s) but on the PDPC update in the previous line. This prediction method may be applied to purely vertical and purely horizontal prediction modes and to the directional modes having integer slopes. That is, the prediction modes when the predictor values for the target pixels match directly with reference samples. The PDPC process may be modified to account for this line by line prediction process. The systems and methods have the potential to improve the compression efficiency.

**BRIEF DESCRIPTION OF THE DRAWINGS**

A more detailed understanding may be had from the following description, given by way of example in conjunction with the accompanying drawings, wherein like reference numerals in the figures indicate like elements, and wherein:

FIG. 1 illustrates a block diagram of an embodiment of video encoder in which various aspects of the embodiments may be implemented.
FIG. 2 illustrates a block diagram of an embodiment of video encoder in which various aspects of the embodiments may be implemented.
FIG. 3 illustrates a block diagram of a system within which aspects of the present embodiments may be implemented;
FIG. 4 illustrates a target block of reference samples on the first reference line;
FIG. 5 is a diagram illustrating an interpolation of predictor sample using 6 nearest reference samples in exploratory compression model (ECM);
FIG. 6 depicts a diagram illustrating the position dependent pixel compensation (PDPC) in intra prediction for a positive vertical direction;;
FIG. 7 depicts a diagram illustrating a gradient PDPC process in Versatile Video Coding (WC) and ECM;
FIG. 8 illustrates the prediction for purely vertical or horizontal directions with (A) depicting a block illustrating ECM prediction and (B) depicting a block illustrating intra prediction with line update for purely vertical and horizontal directions;
FIG. 9 illustrates a method for intra prediction with line update for purely vertical and horizontal directions;
FIG. 10 illustrates the prediction for directions with integer slope with (A) depicting a block illustrating ECM prediction and (B) depicting a block illustrating intra prediction with line update for directions with integer slope; and
FIG 11 illustrates a method for intra prediction with line update for directions with integer slope.

**DETAILED DESCRIPTION**

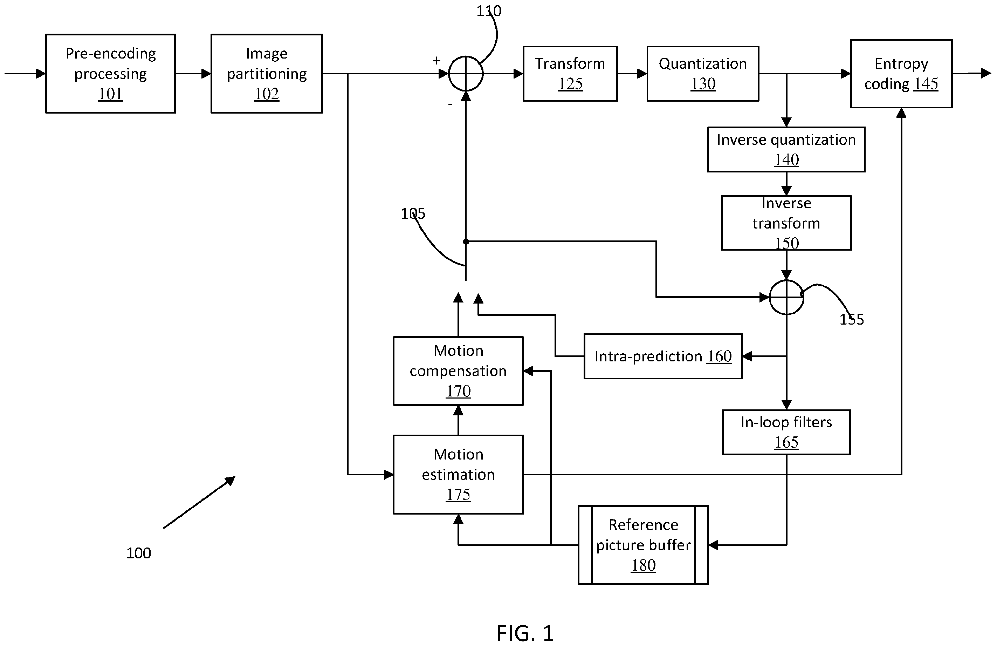

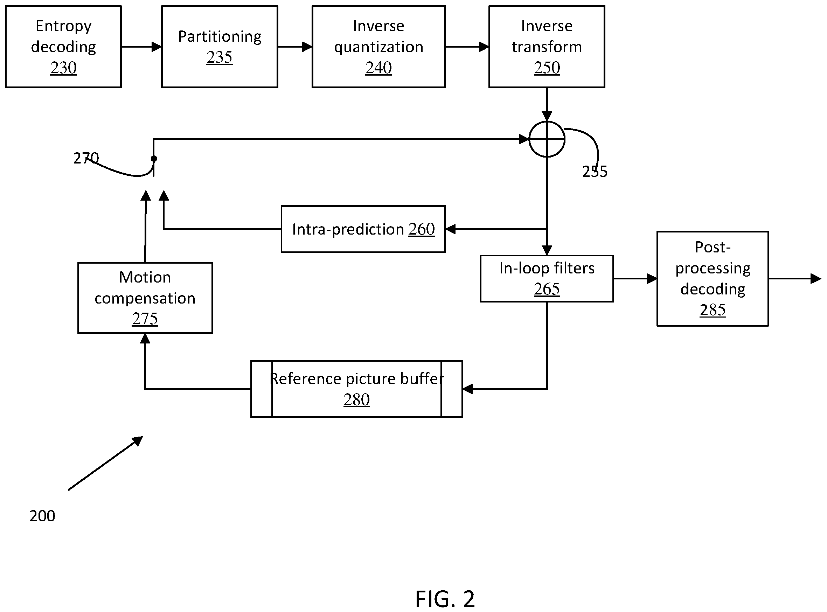

Various methods and other aspects described in this application can be used to modify modules, for example, the motion compensation 170, 275, motion estimation 175, entropy coding, intra 160, 260 and/or decoding modules 145, 230, of a video encoder 100 and decoder 200 as shown in FIG. 1 and FIG. 2. Moreover, the present aspects are not limited to WC or HEVC, and can be applied, for example, to other standards and recommendations, whether pre-existing or future-developed, and extensions of any such standards and recommendations (including WC and HEVC). Unless indicated otherwise, or technically precluded, the aspects described in this application can be used individually or in combination.

Various numeric values are used in the present application, for example. The specific values are for example purposes and the aspects described are not limited to these specific values.

FIG. 1 illustrates an encoder 100. Variations of this encoder 100 are contemplated, but the encoder 100 is described below for purposes of clarity without describing all expected variations.

Before being encoded, the video sequence may go through pre-encoding processing 101, for example, applying a color transform to the input color picture (e.g., conversion from RGB 4:4:4 to YCbCr 4:2:0), or performing a remapping of the input picture components in order to get a signal distribution more resilient to compression (for instance using a histogram equalization of one of the color components). Metadata can be associated with the pre-processing, and attached to the bitstream.

In the encoder 100, a picture is encoded by the encoder elements as described below. The picture to be encoded is partitioned 102 and processed in units of, for example, CUs. Each unit is encoded using, for example, either an intra or inter mode. When a unit is encoded in an intra mode, it performs intra prediction 160. In an inter mode, motion estimation 175 and compensation 170 are performed. The encoder decides 105 which one of the intra mode or inter mode to use for encoding the unit, and indicates the intra/inter decision by, for example, a prediction mode flag. Prediction residuals are calculated, for example, by subtracting 110 the predicted block from the original image block.

The prediction residuals are then transformed 125 and quantized 130. The quantized transform coefficients, as well as motion vectors and other syntax elements, are entropy coded 145 to output a bitstream. The encoder can skip the transform and apply quantization directly to the non-transformed residual signal. The encoder can bypass both transform and quantization, i.e., the residual is coded directly without the application of the transform or quantization processes.

The encoder decodes an encoded block to provide a reference for further predictions. The quantized transform coefficients are de-quantized 140 and inverse transformed 150 to decode prediction residuals. Combining 155 the decoded prediction residuals and the predicted block, an image block is reconstructed. In-loop filters 165 are applied to the reconstructed picture to perform, for example, deblocking/SAO (Sample Adaptive Offset) filtering to reduce encoding artifacts. The filtered image is stored at a reference picture buffer 180.

FIG. 2 illustrates a block diagram of a video decoder 200. In the decoder 200, a bitstream is decoded by the decoder elements as described below. Video decoder 200 generally performs a decoding pass reciprocal to the encoding pass as described in FIG. 1. The encoder 100 also generally performs video decoding as part of encoding video data.

In particular, the input of the decoder includes a video bitstream, which can be generated by video encoder 100. The bitstream is first entropy decoded 230 to obtain transform coefficients, motion vectors, and other coded information. The picture partition information indicates how the picture is partitioned. The decoder may therefore divide 235 the picture according to the decoded picture partitioning information. The transform coefficients are de-quantized 240 and inverse transformed 250 to decode the prediction residuals. Combining 255 the decoded prediction residuals and the predicted block, an image block is reconstructed. The predicted block can be obtained 270 from intra prediction 260 or motion-compensated prediction (i.e., inter prediction) 275. In-loop filters 265 are applied to the reconstructed image. The filtered image is stored at a reference picture buffer 280.

The decoded picture can further go through post-decoding processing 285, for example, an inverse color transform (e.g. conversion from YCbCr 4:2:0 to RGB 4:4:4) or an inverse remapping performing the inverse of the remapping process performed in the pre-encoding processing 101. The post-decoding processing can use metadata derived in the pre-encoding processing and signaled in the bitstream.

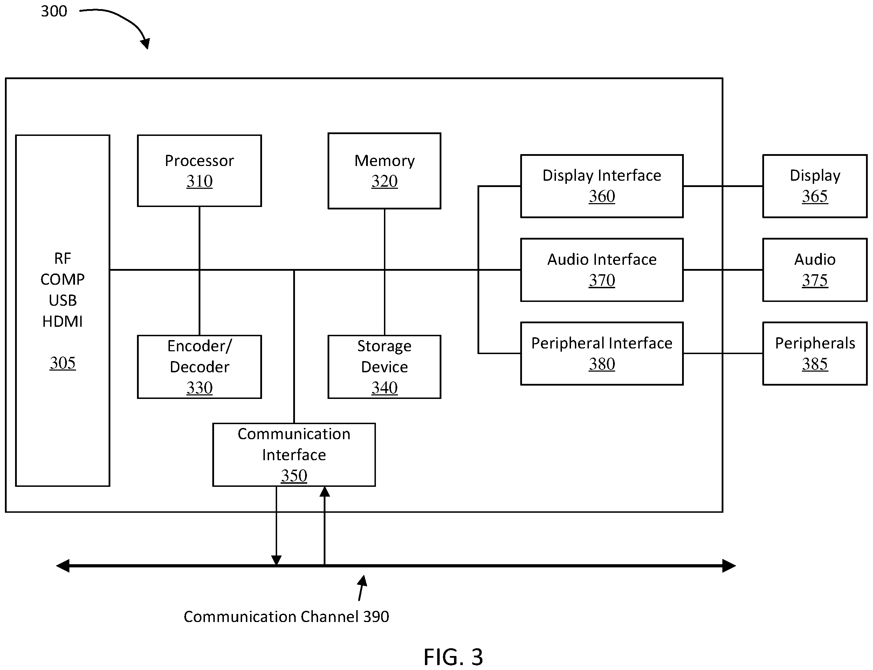

FIG. 3 illustrates a block diagram of an example of a system in which various aspects and embodiments can be implemented. System 300 may be embodied as a device including the various components described below and is configured to perform one or more of the aspects described in this application. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 300, singly or in combination, may be embodied in a single integrated circuit, multiple ICs, and/or discrete components. For example, in at least one embodiment, the processing and encoder/decoder elements of system 300 are distributed across multiple ICs and/or discrete components. In various embodiments, the system 300 is communicatively coupled to other systems, or to other electronic devices, via, for example, a communications bus or through dedicated input and/or output ports. In various embodiments, the system 300 is configured to implement one or more of the aspects described in this application.

The system 300 includes at least one processor 310 configured to execute instructions loaded therein for implementing, for example, the various aspects described in this application. Processor 310 may include embedded memory, input output interface, and various other circuitries as known in the art. The system 300 includes at least one memory 320 (e.g., a volatile memory device, and/or a non-volatile memory device). System 300 includes a storage device 340, which may include non-volatile memory and/or volatile memory, including, but not limited to, EEPROM, ROM, PROM, RAM, DRAM, SRAM, flash, magnetic disk drive, and/or optical disk drive. The storage device 340 may include an internal storage device, an attached storage device, and/or a network accessible storage device, as non-limiting examples.

System 300 includes an encoder/decoder module 330 configured, for example, to process data to provide an encoded video/3D object or decoded video/3D object, and the encoder/decoder module 330 may include its own processor and memory. The encoder/decoder module 330 represents module(s) that may be included in a device to perform the encoding and/or decoding functions. As is known, a device may include one or both of the encoding and decoding modules. Additionally, encoder/decoder module 330 may be implemented as a separate element of system 300 or may be incorporated within processor 310 as a combination of hardware and software as known to those skilled in the art.

Program code to be loaded onto processor 310 or encoder/decoder 330 to perform the various aspects described in this application may be stored in storage device 340 and subsequently loaded onto memory 320 for execution by processor 310. In accordance with various embodiments, one or more of processor 310, memory 320, storage device 340, and encoder/decoder module 330 may store one or more of various items during the performance of the processes described in this application. Such stored items may include, but are not limited to, the input video/3D object, the decoded video/3D object or portions of the decoded video/3D object, the bitstream, matrices, variables, and intermediate or final results from the processing of equations, formulas, operations, and operational logic.

In several embodiments, memory inside of the processor 310 and/or the encoder/decoder module 330 is used to store instructions and to provide working memory for processing that is needed during encoding or decoding. In other embodiments, however, a memory external to the processing device (for example, the processing device may be either the processor 310 or the encoder/decoder module 330) is used for one or more of these functions. The external memory may be the memory 320 and/or the storage device 340, for example, a dynamic volatile memory and/or a non-volatile flash memory. In several embodiments, an external non-volatile flash memory is used to store the operating system of a television. In at least one embodiment, a fast external dynamic volatile memory such as a RAM is used as working memory for coding and decoding operations, such as for instance MPEG-2, HEVC, or VVC.

The input to the elements of system 300 may be provided through various input devices as indicated in block 305. Such input devices include, but are not limited to, (i) an RF portion that receives an RF signal transmitted, for example, over the air by a broadcaster, (ii) a composite input terminal, (iii) a USB input terminal, and/or (iv) an HDMI input terminal.

In various embodiments, the input devices of block 305 have associated respective input processing elements as known in the art. For example, the RF portion may be associated with elements suitable for (i) selecting a desired frequency (also referred to as selecting a signal, or band-limiting a signal to a band of frequencies), (ii) down converting the selected signal, (iii) band-limiting again to a narrower band of frequencies to select (for example) a signal frequency band which may be referred to as a channel in certain embodiments, (iv) demodulating the down converted and bandlimited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion may include a tuner that performs various of these functions, including, for example, down converting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, down converting, and filtering again to a desired frequency band. Various embodiments rearrange the order of the above-described (and other) elements, remove some of these elements, and/or add other elements performing similar or different functions. Adding elements may include inserting elements in between existing elements, for example, inserting amplifiers and an analog-to-digital converter. In various embodiments, the RF portion includes an antenna.

Additionally, the USB and/or HDMI terminals may include respective interface processors for connecting system 300 to other electronic devices across USB and/or HDMI connections. It is to be understood that various aspects of input processing, for example, Reed-Solomon error correction, may be implemented, for example, within a separate input processing IC or within processor 310 as necessary. Similarly, aspects of USB or HDMI interface processing may be implemented within separate interface ICs or within processor 310 as necessary. The demodulated, error corrected, and demultiplexed stream is provided to various processing elements, including, for example, processor 310, and encoder/decoder 330 operating in combination with the memory and storage elements to process the data stream as necessary for presentation on an output device.

Various elements of system 300 may be provided within an integrated housing, Within the integrated housing, the various elements may be interconnected and transmit data therebetween using suitable connection arrangement 315, for example, an internal bus as known in the art, including the I2C bus, wiring, and printed circuit boards.

The system 300 includes communication interface 350 that enables communication with other devices via communication channel 390. The communication interface 350 may include, but is not limited to, a transceiver configured to transmit and to receive data over communication channel 390. The communication interface 350 may include, but is not limited to, a modem or network card and the communication channel 390 may be implemented, for example, within a wired and/or a wireless medium.

Data is streamed to the system 300, in various embodiments, using a Wi-Fi network such as IEEE 802.11 . The Wi-Fi signal of these embodiments is received over the communications channel 390 and the communications interface 350 which are adapted for Wi-Fi communications. The communications channel 390 of these embodiments is typically connected to an access point or router that provides access to outside networks including the Internet for allowing streaming applications and other over-the-top communications. Other embodiments provide streamed data to the system 300 using a set-top box that delivers the data over the HDMI connection of the input block 305. Still other embodiments provide streamed data to the system 300 using the RF connection of the input block 305.

The system 300 may provide an output signal to various output devices, including a display 365, speakers 375, and other peripheral devices 385. The other peripheral devices 385 include, in various examples of embodiments, one or more of a stand-alone DVR, a disk player, a stereo system, a lighting system, and other devices that provide a function based on the output of the system 300. In various embodiments, control signals are communicated between the system 300 and the display 365, speakers 375, or other peripheral devices 385 using signaling such as AV. Link, CEC, or other communications protocols that enable device- to-device control with or without user intervention. The output devices may be communicatively coupled to system 300 via dedicated connections through respective interfaces 360, 370, and 380. Alternatively, the output devices may be connected to system 300 using the communications channel 390 via the communications interface 350. The display 365 and speakers 375 may be integrated in a single unit with the other components of system 300 in an electronic device, for example, a television. In various embodiments, the display interface 360 includes a display driver, for example, a timing controller (T Con) chip.

The display 365 and speaker 375 may alternatively be separate from one or more of the other components, for example, if the RF portion of input 305 is part of a separate set-top box. In various embodiments in which the display 365 and speakers 375 are external components, the output signal may be provided via dedicated output connections, including, for example, HDMI ports, USB ports, or COMP outputs.

As mentioned above, in many implementations of two-dimensional or three-dimensional environments, environmental details and/or objects or entities may be represented by point clouds or meshes of vertices and/or edges forming a large number of triangles or other shapes. For example, for three-dimensional virtual reality, augmented reality, or extended reality (VR, AR, or XR) environments, virtual objects within the environment may be represented as a mesh of triangles to represent the geometry of the object. In order to provide fine detail, the triangles or other shapes utilized in the mesh may be very small, with the mesh having a correspondingly large number of vertices and edges, potentially in the millions or billions of vertices for a complex object. This may require a correspondingly large amount of memory for storage and bandwidth for transmission. When used for three-dimensional video or animation, the problem is even worse: even a relatively simple environment with 1 million vertices, at 30 frames per second, may require a total bandwidth of 3.6 gigabits per second if uncompressed.

Different encoding and decoding standards and implementations have been proposed, including video-based point cloud compression (V-PCC), geometry-based point cloud compression (GPCC), and video-based dynamic mesh coding (V-DMC), promulgated by the Motion Picture Experts Group (MPEG); P11 dynamic mesh coding, developed by Apple Inc.; and others. A mesh may comprise one or more of the following features: a list of vertex positions; a topology defining the connection between the vertices, for instance a list of faces; and optionally photometric data, such as a texture map or color values associated with vertices or faces. The 3D mesh can be derived from a point cloud of the 3D object. The faces defined by connected vertices can be triangles or any other possible polygons or combinations of polygons. In many implementations, photometric data may be projected on texture map so that the texture map can be encoded as a video image.

In the present application, the terms "reconstructed" and "decoded" may be used interchangeably, the terms "encoded" or "coded" may be used interchangeably, the terms "pixel" or "sample" may be used interchangeably, and the terms "image," "picture" and "frame" may be used interchangeably. Usually, but not necessarily, the term "reconstructed" is used at the encoder side while "decoded" is used at the decoder side.

Although discussed above in terms of implementations using V-PCC codecs, the systems and methods discussed herein are not limited to such codecs, and may be used to encode and decode any suitable two-dimensional or three-dimensional mesh or point cloud.

Versatile Video Coding (VVC) and exploratory compression model (ECM) include several directional intra prediction modes which aim to model object directionalities in a frame. In these prediction modes, using the previously decoded samples on top and on left of a block, called reference samples, a prediction of the pixels in a block occurs by repeating those samples, or samples interpolated using those reference samples, along a specified direction in a first step. Since this process can lead to luminance discontinuities at the top or left boundaries of a block, a subsequent step referred to as position dependent pixel compensation (PDPC) may be performed. PDPC is designed to smooth the initial prediction values near a boundary using the reference samples on the same side. This PDPC approach to prediction is beneficial for cases where the luminance intensity may change significantly from one side of reference samples to the other side of reference samples.

As VVC and ECM generally are used to support large block sizes, this simplistic prediction model may be inefficient in such cases. For example, in ECM, there are various other prediction modes such as decoder side intra mode derivation (DIMD), template based intra mode derivation (TIMD), spatial geometric partition mode (SGPM), template based multiple reference lines (TMRL), etc., where the final prediction is obtained as a blending of several predictions. In order to overcome this inefficiency, and to provide a more efficient solution, an alternative approach for certain modes, such as the strictly vertical and horizontal modes and the directional modes with integer slope is provided. In this provided approach, the prediction of a sample is determined based on the predicted values in the previous row or column in the same block.

The basic intra prediction method used in ECM 10.0 is described to aid in understanding the present embodiments. DIMD, TIMD, SGPM and TMRL are not described as these methods utilize the basic intra prediction method. The present systems and methods may be applied to all of these methods and such basic intra prediction method is described only to aid the understanding of the present system and methods described herein. Intra template matching (IntraTMP), intra block copy (IBC), and matrix intra prediction (MIP) are not described since these methods do not use the basic intra prediction method.

VVC and ECM specify 65 angular prediction modes for intra prediction of any target block. The modes are associated with prediction directions ranging from 45 degrees to -135 degrees in clockwise manner. Depending on the block shape, some angular modes are replaced with an equal number of wide angular modes defined beyond the range above. The modes may be referred to as horizontal if the modes refer to the directions below the diagonal direction (i.e., from top left towards bottom right). Otherwise, the modes are referred to as vertical. The modes may be referred to as positive or negative depending on which side of the purely horizontal (i.e., below or above purely horizontal) or purely vertical (i.e., to the right or left of the purely vertical) direction the modes belong to. Thus, the directions below and including purely horizontal, and to the right of and including purely vertical are referred to as positive directions. The remaining directions are referred to as negative directions.

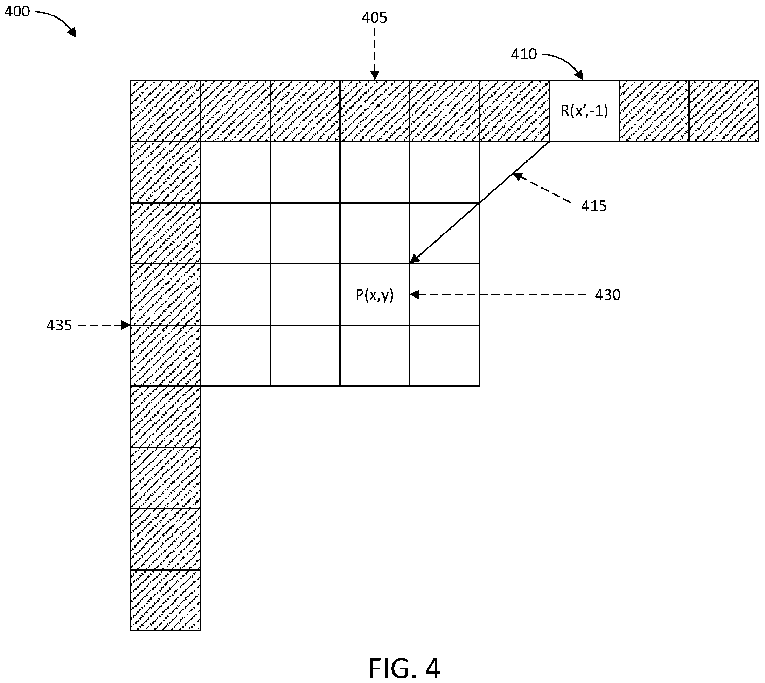

FIG. 4 illustrates a target block 400 of reference samples on the first reference line. For target block 400 with width W pixels and height H pixels, a top reference array 405 has 2W+1 samples and a left reference array 435 has 2H+1 samples.

For a given target block 400 to be intra predicted, the encoder (such as 160), or the decoder (such as 260), first constructs two reference arrays, one on the top as top reference array 405 and the other on the left as left reference array 435 of the target block 400. The reference samples in the reference arrays 405, 435 may be derived from the decoded samples on top, top-right, left, left-bottom and top-left decoded blocks. If some of the samples on the top or the left are not available because of the corresponding coding units (CUs) being not in the same slice, or the current CU being at a frame boundary, etc., then a method called reference sample substitution is performed, where the missing samples are copied from the available samples in a clock-wise direction. Then depending on the block size and the prediction mode, the reference samples are filtered with the low-pass filter [1 2 1]/4. Specifically, the reference samples are filtered if the prediction mode is planar and the block size is greater than or equal to 8x8, or if the block size is greater than 4x4 and the prediction mode has integer slope. That is, if the absolute value of the angle parameter predIntraAngle is a multiple of 32, meaning the predictor samples are at integer positions for all target pixels. If the prediction mode does not have integer slope but satisfies the filtering condition, then a flag interpolationFlag may be enabled. The value of the interpolationFlag determines whether the cubic filter or the smoothing filter is used during the interpolation. If interpolationFlag is enabled, a smoothing filter may be used. If the interpolationFlag is not enabled, a cubic filter may be used. For the chroma signals, the reference samples may not be filtered. ECM, like VVC, supports predictions based on multiple reference lines (MRL). This MRL operates except for the first reference line, which may or may not be filtered depending on the target block size and the prediction direction as none of the other reference lines are filtered. Thus, the prediction with any reference line other than the first line (i.e., the reference line index multiRefIdx > 0) uses a cubic filter for interpolation.

As illustrated in FIG. 4 with target block 400, there is a top reference array 405 and a left reference array 435, described above. In predicting a target pixel 430 of target block 400, a predictor sample 410 within top reference array 405 is used. Prediction sample 410 creates a prediction direction 415 to target pixel 430 as shown. In this illustration of target block 400 with prediction direction 415 there is an integer slope.

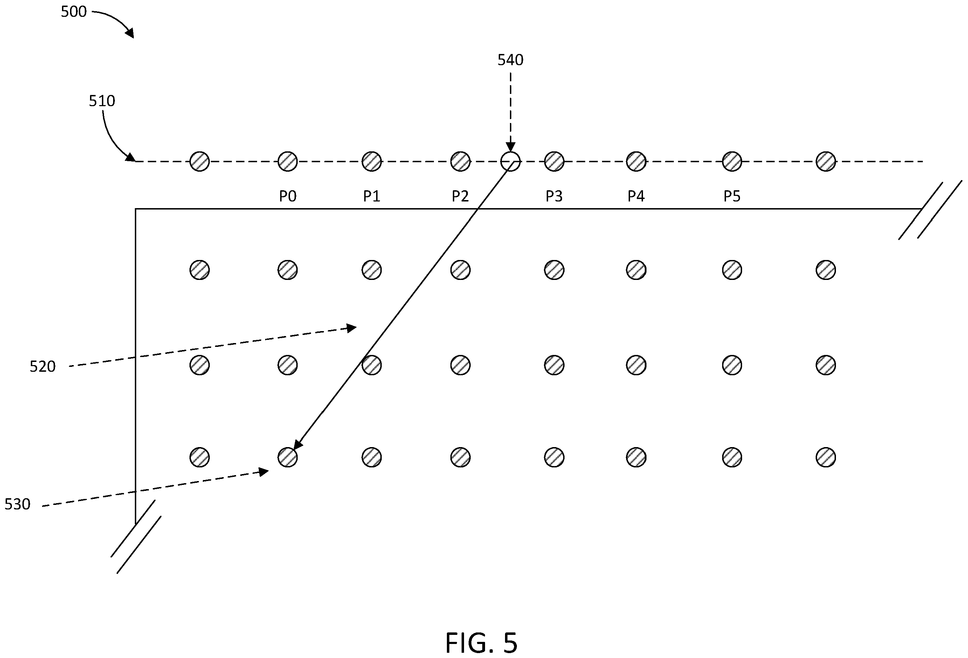

FIG. 5 is a diagram 500 illustrating an interpolation of predictor sample using 6 nearest reference samples in ECM. For any target pixel 530, the reference sample 510 utilized may be referred to as predictor 540. If the prediction mode has integer slope, then predictor 540 for every target pixel 530 coincides with a reference sample 510. In this case, the corresponding reference sample 510 is used as the predictor 540 as it is, i.e., without interpolation filtering. For all other angular prediction modes, for Luma signal, the nearest six reference samples of predictor 540 are used for interpolating predictor 540 as set forth in Equation 1:

$$P\_pred\ (x, y) = (f[0]*P0+f[1]*P1+f[2]*P2+f[3]*P3+ f[4]*P4+f[5]*P5+128)>>8 \qquad \text{Equation 1,}$$

where f[i] denotes the ith filter coefficient and P0-P5 represent the nearest 6 reference samples 510 to predictor 540. The filter coefficients f[i],i=0,1,2,3,4,5 are normalized with integral values so that the sum is equal to 256. The filter selected may depend on the value of the flag interpolationFlag, as described above. The interpolationFlag may be based on the block size and prediction direction.. If interpolationFlag is enabled, then a smoothing filter is used. If interpolation Flag is not enabled, a cubic filter is used. As the specified cubic filter has both negative and positive coefficient values, a clipping operation is additionally performed to keep the predicted value within the valid dynamic range of the Luma component as set forth in Equation 2:

$$P\_pred(x, y) = Clip((f[0]*P0+f[1]*P1+f[2]*P2+f[3]* P3+f[4]*P4+f[5]*P5+128)>>8) \qquad \text{Equation 2.}$$

For a chroma target block, the two nearest reference samples P2 and P3 are used for interpolating predictor 540. The predictor value is linearly interpolated, as in HEVC and VVC as set forth in Equation 3:

$$P\_pred (x,y) = ((32\text{-}deltaFrac) * P2 +deltaFrac * P3+ 16) >> 5$$

$$\text{Equation 3,}$$

where deltaFrac refers to the distance of the predictor, in units of (1/32)th of a pixel, from the left reference sample P2.

In intra prediction in VVC and ECM, PDPC may be enabled only for positive angular modes. By way of example, a description of the PDPC process for a positive vertical direction is provided. This description is analogous with a positive horizontal direction with the reference arrays interchanged, and the width and the height of the target block interchanged.

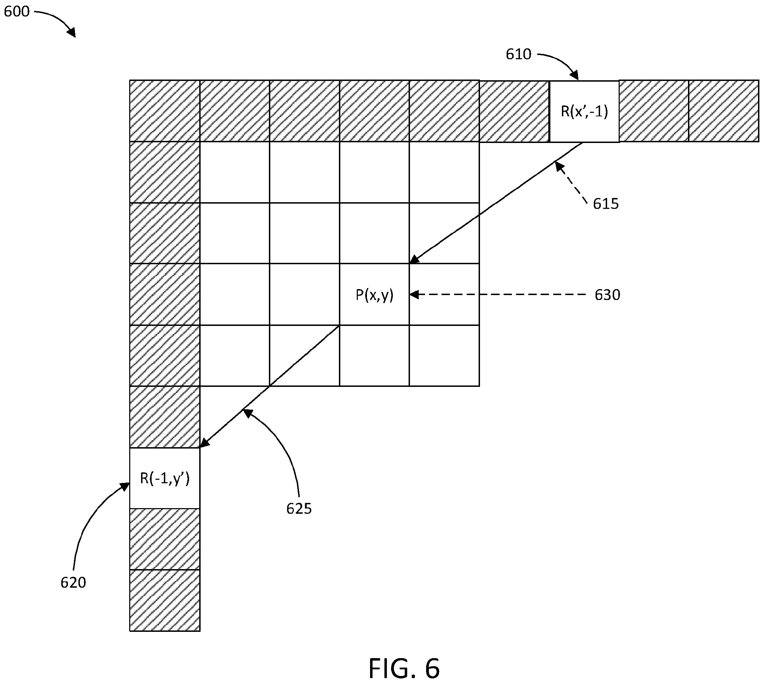

FIG. 6 depicts a diagram 600 illustrating the PDPC in intra prediction for a positive vertical direction. For a target pixel 630 at location (x,y), first an initial prediction is obtained from the top reference array at primary reference sample 610 (x',-1). Unless the prediction direction 615 has integer slope, the primary reference sample 610 is interpolated using a smoothing filter or a cubic interpolation filter, as described above. The predictor is estimated in Equation 4:

$$P(x,y) = R(x',\text{-}1) \qquad \text{Equation 4,}$$

where R(x',-1) is equal to P_pred (x,y) in Equation 2 or Equation 3 above.

FIG. 6 depicts a normal or traditional PDPC process in VVC and ECM. A secondary reference sample 620 may be used to modify the first predicted value for a positive prediction direction. In the PDPC process, prediction direction 615 may be extended to obtain a secondary reference sample 620 R(-1,y') on the left reference array. Secondary reference sample 620, for lower complexity, may be chosen as the nearest neighbor when the extension does not pass through a reference sample position. To keep the complexity low, no interpolation operation is performed. If absInvAngle denotes the inverse angle value corresponding to prediction direction 615, the y-coordinate y' of the secondary reference sample 620 is obtained from Equation 5:

$$y' = 1 + y + (((1 + x)*absInvAngle + 256) >> 9) \qquad \text{Equation 5.}$$

Now the initial prediction value at (x,y) is modified as in Equation 6:

$$P(x,y) = P(x,y) + (wL * (R(\text{-}1,y') - P(x,y)) + 32) >> 6 \qquad \text{Equation 6,}$$

where the weight parameter wL is computed in Equation 7:

$$wL = 32 >> (2*x >> scale) \qquad \text{Equation 7,}$$

and the scale parameter is computed in Equation 8:

$$scale = min(2, Log2(height) - (Log2(3 * absInvAngle - 2) - 8)) \qquad \text{Equation 8,}$$

where 'height' represents the height of the target block for a vertical mode, or the width of the target block for a horizontal mode.

The scale parameter is a positive integer between 0 and 2. As the value of wL decreases to 0 with increasing x, the scale parameter determines the number of columns in the target block that are modified in the PDPC process. Since the maximum value of wL is 32, the number of columns undergoing PDPC is (3<< scale). Table 1 shows the number of columns used for PDPC and the corresponding values of wL for different scale parameter values. For positive horizontal directions, the number of columns is replaced by the number of rows and wL(x) is replaced by wL(y) for y = 0,1,...(K-1).

Table 1: Number of columns or rows processed in PDPC and the corresponding weights for predictions along positive vertical directions.

| scale | Num Cols(K) | wL(x) for x=0,1,...(K-1) |
|---|---|---|
| 0 | 3 | 32, 8, 2 |
| 1 | 6 | 32, 16, 8, 4, 2, 1 |
| 2 | 12 | 32, 32, 16, 16, 8, 8, 4, 4, 2, 2, 1, 1 |

For a positive horizontal direction, the process remains the same except that the initial prediction is made using the reference array on the left, and secondary reference samples are localized on the top reference array. In this case, the PDPC may update initial prediction values on K rows, where K is specified in Table 1.

When prediction direction 615 is close to purely vertical (or purely horizontal for horizontal modes), depending on the block height (or width for horizontal modes), the scale parameter computed above can be a negative integer (i.e., less than 0). This implies that, for even 3 pixels in the last row (or the last column for horizontal modes) of the target block, not all the secondary reference samples 620 are available. In this case, the gradient PDPC is enabled and the scale parameter is recomputed as defined by Equation 9:

$$scale = (Log2(height) + Log2(width) - 2) >> 2 \qquad Equation\ 9,$$

where 'height' and 'width' refer to the height and width of the target block, respectively.

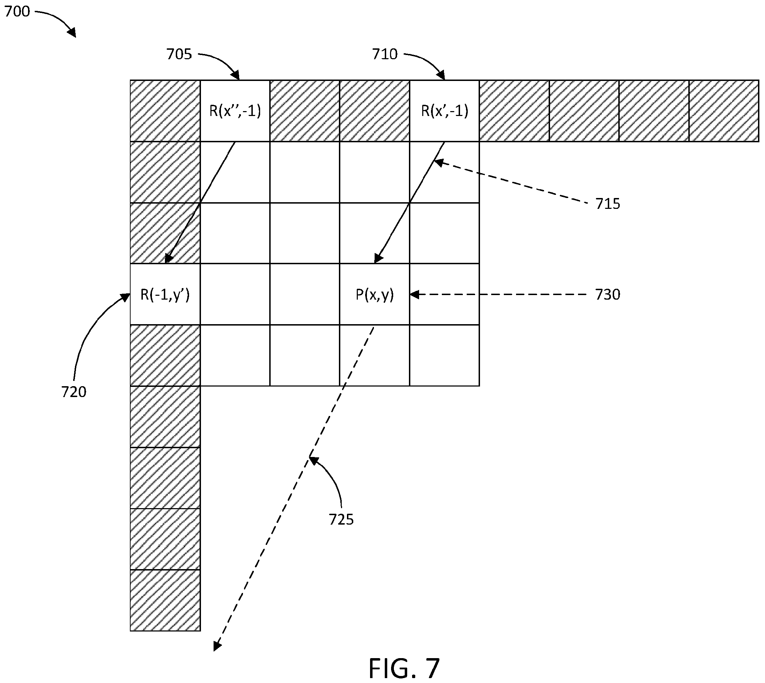

FIG. 7 depicts a diagram 700 illustrating a gradient PDPC process in VVC and ECM. As described above with respect to FIG. 6, a target pixel 730 is predicted based on a primary reference sample 710 using prediction direction 715. When the prediction direction 715 is close to the purely vertical, the extension of the prediction direction 725 fails to intersect the left reference array for localizing the secondary reference sample. In this case, a gradient PDPC process may be used. In the gradient PDPC process, the secondary reference sample 720 is on the left (top) reference array on the same row (column) as target pixel 730. The gradient computed at secondary reference sample 720 is added to the first predicted value with a weight that is a decreasing function of the distance from the left (top) reference array.

The gradient PDPC is performed as shown in FIG. 7. For target pixel 730 at location (x,y), for a positive vertical direction, reference sample 720 on the left reference array on the same row as the target pixel is used as the secondary reference sample. The gradient value is estimated by finding the predictor sample 705 for secondary refence sample 720 and is added to the initial prediction at (x,y) with weighting according to Equation 10:

$$P(x,y) = Clip(P(x,y) + (wL * (R(-1,y) - R(x'',-1)) + 32) >> 6) \qquad Equation\ 10,$$

where R(x",-1) denotes the predictor sample for the secondary reference sample at (-1,y), and wL is computed as before in Equation 11:

$$wL = 32 >> (2*x >> scale) \qquad Equation\ 11,$$

with the recomputed scale parameter. The predictor sample is linearly interpolated whenever x" does not pass through a reference sample index. The computed value is clipped to the dynamic range of the component as it is not guaranteed to lie in the range. The recomputed scale parameter has the minimum value 0 and maximum value 3 (for a maximum block size 128x128). As before, the number of columns undergoing gradient PDPC is (3<< scale), with the recomputed scale value.

For a positive horizontal direction, the process is analogous to that described where the columns are replaced by rows, and the secondary reference samples are on the top reference array.

Intra prediction with line update may be performed. The initial prediction followed by PDPC can be performed at the block level or at the line level. At the block level, the entire block is predicted first and then PDPC is performed. The first part of the prediction is performed line by line until the pixels on the last row or column are predicted; then the PDPC is done line by line until the pixels on the last row or column are processed. At the line level, both the initial prediction and the PDPC are performed one after another row-wise or column-wise depending on the prediction direction until the pixels on the last row or column are processed. Both methods lead to the same final prediction, but the second method, which is used in VVC and ECM reference code, is more efficient since it uses only one loop instead of two.

Irrespective of the method, the predicted pixel values on one line are correlated to those on the previous line as the predictions are made using the same reference array. However, the correlations due to the PDPC operation are not captured well.

In order to improve this process, a prediction of a pixel based on the predicted values on the previous line may occur, where the predicted values already include the PDPC update. In an example, this prediction method may be utilized for the strictly vertical and horizontal directions and the directions with integer slope. In these directions, the initial predicted values of pixels on a line are direct copies of reference samples with a shift (shift is equal to zero for purely vertical and horizontal directions). The new prediction for a pixel on the next line utilizes the PDPC updated value on this line. Two example scenarios are provided below including intra prediction with line update for purely vertical and horizontal directions and intra prediction with line update for directions with integer slope.

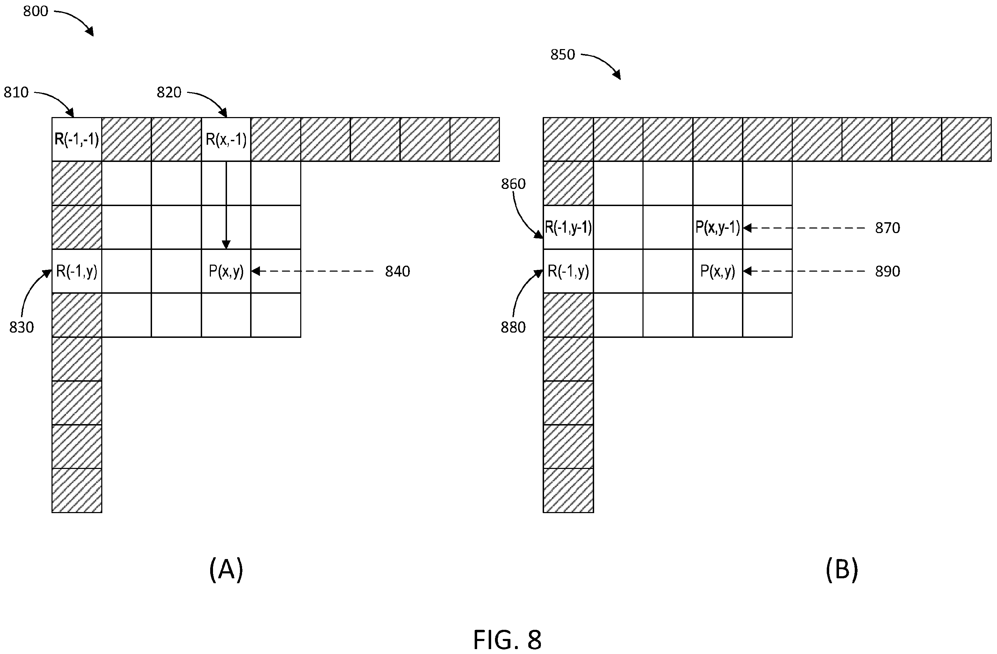

Intra prediction with line update for purely vertical and horizontal directions may be performed. FIG. 8 illustrates the prediction for purely vertical or horizontal directions. FIG. 8 (A) depicts a block 800 illustrating ECM prediction. FIG. 8 (B) depicts a block 850 illustrating intra prediction with line update for purely vertical and horizontal directions.

For FIG. 8 (A), in the purely vertical direction, the initial prediction for a target pixel 840 on a row is based on primary reference sample 820 defined in Equation 12:

$$P(x,y) = R(x, -1), 0 <= x < W \qquad \textit{Equation 12.}$$

Then the PDPC is applied to target pixel 840 predicted value based on secondary reference sample 830 and predictor sample 810 on (3<< scale) pixels as in Equation 13:

$$P(x,y) = Clip(P(x,y) + (wL * (R(-1,y) - R(-1, -1)) + 32) >> 6), 0 <= x < (3<<scale) \qquad \textit{Equation 13,}$$

where the weight wL is computed as described above and set forth in Equation 14:

$$wL = 32 >> (2*x >> scale) \qquad \textit{Equation 14.}$$

The scale parameter is computed as in gradient PDPC as described.

For FIG. 8 (B), the pixels (including pixel 870) on the first line are predicted as above. From the next line onwards, the pixels (including target pixel 890) are predicted based on the first line (including pixel 870) as defined in Equation 15:

$$P(x,y) = P(x,y-1), 0 <= x < W \qquad \textit{Equation 15.}$$

Then the PDPC is applied for target pixel 890 based on secondary reference sample 880 and predictor 860 in the first line as set forth in Equation 16:

$$P(x,y) = Clip(P(x,y) + (wL * (R(-1,y) - R(-1,y-1)) + 32) >> 6), 0 <= x < (3<<scale), \qquad \textit{Equation 16,}$$

where wL is computed as described herein.

A system and method for the purely horizontal direction is analogous to that described with respect to FIG. 8, with the reference arrays on top and on left swapped, the height and width of the target block swapped, and the final prediction transposed.

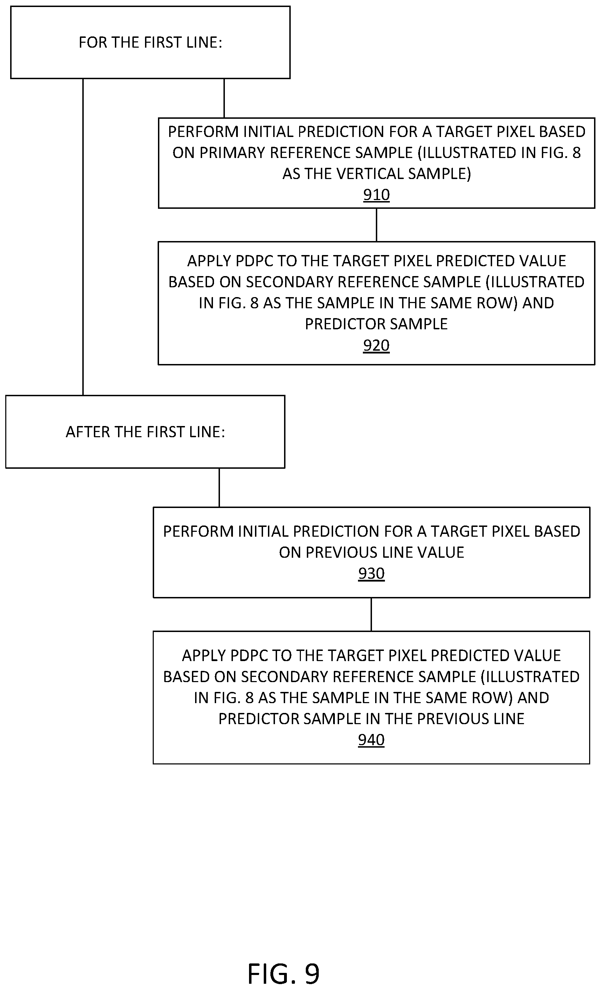

FIG. 9 illustrates a method 900 for intra prediction with line update for purely vertical and horizontal directions. Method 900 includes for the first line, performing initial prediction for a target pixel based on the primary reference sample at 910 to achieve the target pixel predicted value. Then at 920, still for the first line, method 900 includes applying PDPC to the target pixel predicted value at 910 based on the secondary reference sample and predictor sample.

For lines after the first line, method 900 includes performing initial prediction for a target pixel based on the previous line value at 930 to achieve the target pixel predicted value. Then at 940, method 900 includes applying PDPC to the target pixel predicted value at 930 based on the secondary reference sample and predictor sample in the previous line.

As would be understood, the use of the previous line is described above, while any other line that has been calcluated previously may be used in place of the previous line. Such replacements may include a line directly above, or adjacent to, the target pixel, for example, as well as using as a reference line previously calculated lines for a periodic period of time, such as five lines, for example.

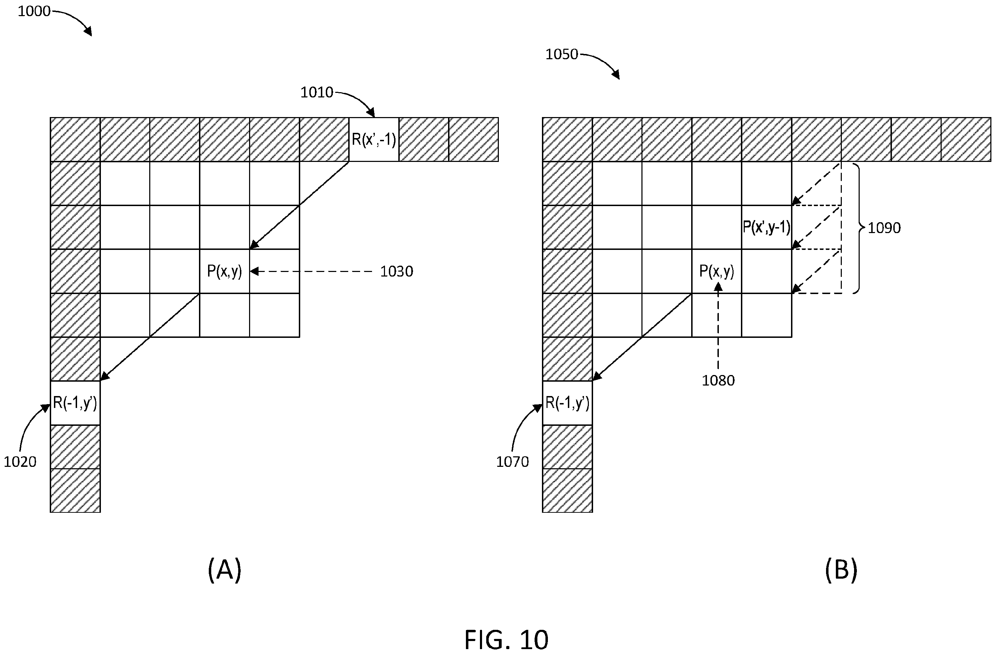

Intra prediction with line update for directions with integer slope may be performed. Similar to the purely horizontal and purely vertical configurations, the configuration with integer slope may also benefit in efficiency. FIG. 10 illustrates the prediction for directions with integer slope. FIG. 10 (A) depicts a block 1000 illustrating ECM prediction. FIG. 10 (B) depicts a block 1050 illustrating intra prediction with line update for directions with integer slope.

For FIG. 10 (A) in a vertical direction with integer slope, the initial prediction for a target pixel 1030 on a line is based on primary reference sample 1010 set forth in Equation 17:

$$P(x,y) = R(x+\text{deltaInt},-1),\ 0 <= x < W \qquad Equation\ 17,$$

where the displacement, denoted by deltaInt, is computed in Equation 18:

$$\text{deltaInt} = ((1+y+\text{multiRefIdx}) * \text{predIntraAngle}) >> 5 \qquad Equation\ 18.$$

Here multiRefIdx denotes the reference line index and predIntraAngle denotes the angle parameter associated with the prediction direction. Then, if the angle is positive, i.e., predIntraAngle > 0, or equivalently, deltaInt > 0, the PDPC is applied to target pixel 1030 predicted value based on secondary reference sample 1020 on (3<< scale) pixels as in Equation 19:

$$P(x,y) = P(x,y) + (wL * (R(-1,y') - P(x,y)) + 32) >> 6,\ 0 <= x < (3<<\text{scale})$$
$$Equation\ 19,$$

where the weight wL is computed as described above and set forth in Equation 20:

$$wL = 32 >> (2*x >> \text{scale}) \qquad Equation\ 20,$$

and the scale parameter is computed as in normal PDPC. Because the prediction direction has integer slope, the secondary reference sample 1020 R(-1, y') matches with a reference sample on the left.

For FIG. 10 (B), the pixels (including pixels 1090) on the first line are predicted as above but with deltaInt extra pixels on the right. From the next line onwards, the pixels (including pixel 1080) are predicted based on the first line (including pixels 1090) as defined in Equation 21:

$$P(x,y) = P(x+\text{deltaInt}, y-1),\ 0 <= x < W + \text{deltaInt} \qquad Equation\ 21,$$

where deltaInt is computed in Equation 22:

$$\text{deltaInt} = \text{predIntraAngle} >> 5 \qquad Equation\ 22.$$

Then the PDPC for target pixel 1080 is calculated based on secondary reference sample 1070 as set forth in Equation 23:

$$P(x,y) = P(x,y) + (wL * (R(-1,y') - P(x,y)) + 32) >> 6,\ 0 <= x < (3<<\text{scale})$$
$$Equation\ 23.$$

As described in FIG. 10 (B) the prediction method is applied in the case of positive directions with integer slope, i.e., when predIntraAngle > 0, or equivalently, deltaInt > 0. To accommodate for the prediction of W or H pixels on a line, deltaInt extra samples are predicted on the previous line.

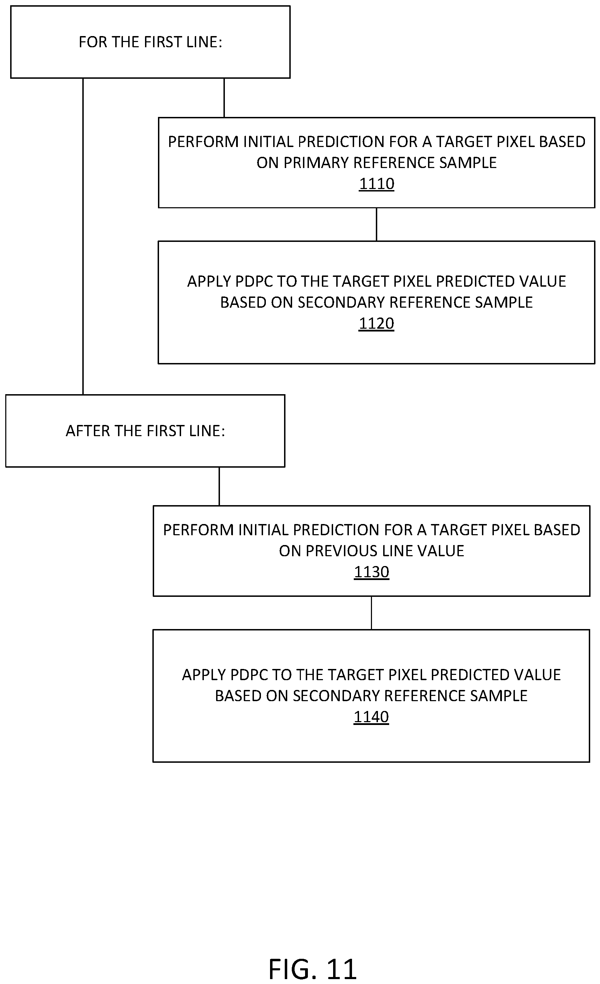

FIG 11 illustrates a method 1100 for intra prediction with line update for directions with integer slope. Method 1100 includes for the first line, performing initial prediction for a target pixel based on the primary reference sample at 1110 to achieve the target pixel predicted value. Then at 1120, still for the first line, method 1100 includes applying PDPC to the target pixel predicted value at 1110 based on the secondary reference sample.

For lines after the first line, method 1100 includes performing initial prediction for a target pixel based on the previous line value at 1130 to achieve the target pixel predicted value. Then at 1140, method 1100 includes applying PDPC to the target pixel predicted value at 1130 based on the secondary reference sample.

As would be understood, the use of the previous line is described above, while any other line that has been calcluated previously may be used in place of the previous line. Such replacements may include a line directly above, or adjacent to, the target pixel, for example, as well as using as a reference line previously calculated lines for a periodic period of time, such as five lines, for example.

The method for horizontal directions with integer slope is analogous to that described in FIG. 10 with the reference arrays on top and on left swapped, the height and width of the target block swapped, and the final prediction transposed.

The line prediction system and method may be used for purely vertical and horizontal modes and all angular prediction modes with integer slopes. The line prediction system and method may replace the existing method in VVC, ECM etc.

The line prediction system and method may be used for purely vertical and horizontal modes and all angular prediction modes with integer slopes in some specific tools such as DIMD, TIMD, SGPM, TMRL, etc.

The line prediction system and method may be used for purely vertical and horizontal modes and all angular prediction modes with integer slopes when used as standalone angular prediction modes. In tools such as DIMD, TIMD, SGPM, TMRL, etc., the normal angular prediction method may be used.

The line prediction system and method may be used for purely vertical and horizontal modes, but not any other angular prediction modes.

A method for video processing is provided. The method may include video encoding or video decoding. The method includes obtaining a current block data, and performing an intra prediction mode on at least one pixel in the obtained current block data by: predicting an initial prediction for a current line in the block based on a previous predicted line in the block; and applying an adjustment to the initial prediction based on a secondary reference sample. The method may be performed for purely vertical and horizontal modes. The method may be performed angular prediction modes with integer slopes. The method may include the intra prediction mode replacing a method in one of Versatile Video Coding (VVC) and exploratory compression model (ECM). The method may include the intra prediction mode being used in at least one of decoder side intra mode derivation (DIMD), template based intra mode derivation (TIMD), spatial geometric partition mode (SGPM), and template based multiple reference lines (TMRL). The method may include the intra prediction mode being used as standalone angular prediction mode. The method may include the secondary reference sample being in the same line as the at least one pixel. The method may include the adjustment utilizing a predictor sample with the secondary reference sample. The method may include the predictor sample being in the previous predicted line in the block. The method may include the performing of an intra prediction mode being configured for each line of the current block data after a first line of the current block. The method may include the previous predicted line in the block being a line adjacent to the at least one pixel. The method may include the previous predicted line in the block being a first line in the block.

A system for video processing is also provided. The system may include video encoding or video decoding. The system includes a processor communicatively coupled to a memory, the processor and memory configured to: obtain a current block data; and perform an intra prediction mode on at least one pixel in the obtained current block data by: predicting an initial prediction for a current line in the block based on a previous predicted line in the block; and applying an adjustment to the initial prediction based on a secondary reference sample. The system may include processing purely vertical and horizontal modes. The system may include processing angular prediction modes with integer slopes. The system may include processing where the intra prediction mode replaces a method in one of Versatile Video Coding (VVC) and exploratory compression model (ECM). The system may include processing where the intra prediction mode is used in at least one of decoder side intra mode derivation (DIMD), template based intra mode derivation (TIMD), spatial geometric partition mode (SGPM), and template based multiple reference lines (TMRL). The system may include processing where the intra prediction mode is used as standalone angular prediction mode. The system may include processing where the secondary reference sample is in the same line as the at least one pixel. The system may include processing where the adjustment includes utilizing a predictor sample with the secondary reference sample. The system may include processing where the predictor sample is in the previous predicted line in the block. The system may include processing where the performing of an intra prediction mode in configured for each line of the current block data after a first line of the current block. The system may include processing where the previous predicted line in the block is a line adjacent to the at least one pixel. The system may include processing where the previous predicted line in the block is a first line in the block.

Various methods are described herein, and each of the methods comprises one or more steps or actions for achieving the described method. Unless a specific order of steps or actions is required for proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an ordering to the modified operations unless specifically required. So, in this example, the first decoding need not be performed before the second decoding, and may occur, for example, before, during, or in an overlapping time period with the second decoding.

Moreover, the present aspects are not limited to V-PCC, G-PCC, P11, or V-DMC, and can be applied, for example, to other standards and recommendations, and extensions of any such standards and recommendations. Unless indicated otherwise, or technically precluded, the aspects described in this application can be used individually or in combination. Various numeric values are used in the present application. The specific values are for example purposes and the aspects described are not limited to these specific values.

Various implementations involve decoding. "Decoding," as used in this application, may encompass all or part of the processes performed, for example, on a received encoded sequence in order to produce a final output suitable for display. In various embodiments, such processes include one or more of the processes typically performed by a decoder, for example, entropy decoding, inverse quantization, inverse transformation, and differential decoding. Whether the phrase "decoding process" is intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application may encompass all or part of the processes performed, for example, on an input video sequence in order to produce an encoded bitstream.

The implementations and aspects described herein may be implemented in, for example, a method or a process, an apparatus, a software program, a data stream, or a signal. Even if only discussed in the context of a single form of implementation (for example, discussed only as a method), the implementation of features discussed may also be implemented in other forms (for example, an apparatus or program). An apparatus may be implemented in, for example, appropriate hardware, software, and firmware. The methods may be implemented in, for example, an apparatus, for example, a processor, which refers to processing devices in general, including, for example, a computer, a microprocessor, an integrated circuit, or a programmable logic device. Processors also include communication devices, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment. Additionally, this application may refer to "determining" various pieces of information. Determining the information may include one or more of, for example, estimating the information, calculating the information, predicting the information, or retrieving the information from memory.

Further, this application may refer to "accessing" various pieces of information. Accessing the information may include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information may include one or more of, for example, accessing the information, or retrieving the information (for example, from memory). Further, "receiving" is typically involved, in one way or another, during operations, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of', for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Also, as used herein, the word "signal" refers to, among other things, indicating something to a corresponding decoder. For example, in certain embodiments the encoder signals a quantization matrix for de-quantization. In this way, in an embodiment the same parameter is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling can be used without transmitting (implicit signaling) to simply allow the decoder to know and select the particular parameter. By avoiding transmission of any actual functions, a bit savings is realized in various embodiments. It is to be appreciated that signaling can be accomplished in a variety of ways.

For example, one or more syntax elements, flags, and so forth are used to signal information to a corresponding decoder in various embodiments. While the preceding relates to the verb form of the word "signal", the word "signal" can also be used herein as a noun.

As will be evident to one of ordinary skill in the art, implementations may produce a variety of signals formatted to carry information that may be, for example, stored or transmitted. The information may include, for example, instructions for performing a method, or data produced by one of the described implementations. For example, a signal may be formatted to carry the bitstream of a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

**Claims**

1. A method for video decoding comprising:

    obtaining a current block data; and
    performing an intra prediction mode on at least one pixel in the obtained current block data by:

        predicting an initial prediction for a current line in the block based on a previous predicted line in the block; and
        applying an adjustment to the initial prediction based on a secondary reference sample.

2. The method of claim 1 wherein the performing is for purely vertical and horizontal modes.

3. The method of claim 1 or 2 wherein the performing is for angular prediction modes with integer slopes.

4. The method of any of claims 1-3 wherein the intra prediction mode replaces a method in one of Versatile Video Coding (VVC) and exploratory compression model (ECM) .

5. The method of any of claims 1-4 wherein the intra prediction mode is used in at least one of decoder side intra mode derivation (DIMD), template based intra mode derivation (TIMD), spatial geometric partition mode (SGPM), and template based multiple reference lines (TMRL).

6. The method of any of claims 1-5 wherein the intra prediction mode is used as standalone angular prediction mode.

7. The method of any of claims 1-6 wherein the secondary reference sample is in the same line as the at least one pixel.

8. The method of any of claims 1-7 wherein the adjustment includes utilizing a predictor sample with the secondary reference sample.

9. The method of any of claims 1-8 wherein the predictor sample is in the previous predicted line in the block.

10. The method of any of claims 1-9 wherein the performing of an intra prediction mode in configured for each line of the current block data after a first line of the current block.

11. The method of any of claims 1-10 wherein the previous predicted line in the block is a line adjacent to the at least one pixel.

12. A system for video decoding comprising:

    a processor communicatively coupled to a memory,
    the processor and memory configured to:

        obtain a current block data; and
        perform an intra prediction mode on at least one pixel in the obtained current block data by:

            predicting an initial prediction for a current line in the block based on a previous predicted line in the block; and

applying an adjustment to the initial prediction based on a secondary reference sample.

13. The system of claim 12 wherein the processing is performed for purely vertical and horizontal modes.

14. The system of any of claims 12-13 wherein the processing is performed angular prediction modes with integer slopes.

15. The system of any of claims 12-14 wherein the secondary reference sample is in the same line as the at least one pixel, wherein the adjustment includes utilizing a predictor sample with the secondary reference sample and the predictor sample is in the previous predicted line in the block.

FIG. 1

EP 4 676 030 A1

FIG. 2

FIG. 3

FIG. 4

500

510

520

530

540

P0 P1 P2 P3 P4 P5

FIG. 5

FIG. 6

FIG. 7

800
810 R(-1,-1)
820 R(x,-1)
830 R(-1,y)
840 P(x,y)

(A)

850
860 R(-1,y-1)
870 P(x,y-1)
880 R(-1,y)
890 P(x,y)

(B)

FIG. 8

FOR THE FIRST LINE:

PERFORM INITIAL PREDICTION FOR A TARGET PIXEL BASED ON PRIMARY REFERENCE SAMPLE (ILLUSTRATED IN FIG. 8 AS THE VERTICAL SAMPLE)
910

APPLY PDPC TO THE TARGET PIXEL PREDICTED VALUE BASED ON SECONDARY REFERENCE SAMPLE (ILLUSTRATED IN FIG. 8 AS THE SAMPLE IN THE SAME ROW) AND PREDICTOR SAMPLE
920

AFTER THE FIRST LINE:

PERFORM INITIAL PREDICTION FOR A TARGET PIXEL BASED ON PREVIOUS LINE VALUE
930

APPLY PDPC TO THE TARGET PIXEL PREDICTED VALUE BASED ON SECONDARY REFERENCE SAMPLE (ILLUSTRATED IN FIG. 8 AS THE SAMPLE IN THE SAME ROW) AND PREDICTOR SAMPLE IN THE PREVIOUS LINE
940

FIG. 9

EP 4 676 030 A1

FIG. 10

FOR THE FIRST LINE:

PERFORM INITIAL PREDICTION FOR A TARGET PIXEL BASED ON PRIMARY REFERENCE SAMPLE
1110

APPLY PDPC TO THE TARGET PIXEL PREDICTED VALUE BASED ON SECONDARY REFERENCE SAMPLE
1120

AFTER THE FIRST LINE:

PERFORM INITIAL PREDICTION FOR A TARGET PIXEL BASED ON PREVIOUS LINE VALUE
1130

APPLY PDPC TO THE TARGET PIXEL PREDICTED VALUE BASED ON SECONDARY REFERENCE SAMPLE
1140

FIG. 11

## EUROPEAN SEARCH REPORT

**Application Number**

EP 24 30 6071

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | RATH (INTERDIGITAL) G ET AL: "Non-CE3: Simplifications of PDPC for diagonal and adjacent diagonal directions", 15. JVET MEETING; 20190703 - 20190712; GOTHENBURG; (THE JOINT VIDEO EXPLORATION TEAM OF ISO/IEC JTC1/SC29/WG11 AND ITU-T SG.16 ), , no. JVET-O0229 ; m48339 ; m48340 4 July 2019 (2019-07-04), XP030218911, Retrieved from the Internet: URL:http://phenix.int-evry.fr/jvet/doc_end _user/documents/15_Gothenburg/wg11/JVET-O0 229-v3.zip JVET-O0229-r2.docx [retrieved on 2019-07-04] * the whole document * ----- | 1-15 | INV. H04N19/105 H04N19/11 H04N19/117 H04N19/176 H04N19/593 |
| A | GAGAN RATH (INTERDIGITAL) ET AL: "Non-EE2: Extension of unified PDPC", 30. JVET MEETING; 20230421 - 20230428; ANTALYA; (THE JOINT VIDEO EXPLORATION TEAM OF ISO/IEC JTC1/SC29/WG11 AND ITU-T SG.16 ), , no. JVET-AD0308 ; m63380 21 April 2023 (2023-04-21), XP030309161, Retrieved from the Internet: URL:https://jvet-experts.org/doc_end_user/ documents/30_Antalya/wg11/JVET-AD0308-v2.z ip JVET-AD0308-v1.docx [retrieved on 2023-04-21] * the whole document * ----- | 1-15 | **TECHNICAL FIELDS SEARCHED (IPC)** H04N |

The present search report has been drawn up for all claims

| Place of search | Date of completion of the search | Examiner |
|---|---|---|
| Munich | 2 December 2024 | Giuliani, Nicola |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
......................................................................................
& : member of the same patent family, corresponding
   document

EPO FORM 1503 03.82 (P04C01)